(19) **Europäisches Patentamt**
**European Patent Office**
**Office européen des brevets**

(11) **EP 1 473 957 B1**

(12) **FASCICULE DE BREVET EUROPEEN**

(45) Date de publication et mention
de la délivrance du brevet:
**28.03.2007 Bulletin 2007/13**

(51) Int Cl.:
***H04Q 7/38*** *(2006.01)*

(21) Numéro de dépôt: **04101613.0**

(22) Date de dépôt: **19.04.2004**

(54) **Procédé de sélection de canal de transmission dans un protocole d'accès multiple à répartition dans le temps et système de communication mettant en oeuvre un tel procédé**

Verfahren zur Auswahl von einem Übertragungskanal in einem Zeitbereichvielfachzugriffssystem, und System dafür

Method for the selection of a transmission channel in a time domain multiple access protocol, and communication system therefor

(84) Etats contractants désignés:
**AT BE BG CH CY CZ DE DK EE ES FI FR GB GR HU IE IT LI LU MC NL PL PT RO SE SI SK TR**

(30) Priorité: **30.04.2003 FR 0305381**

(43) Date de publication de la demande:
**03.11.2004 Bulletin 2004/45**

(73) Titulaire: **FRANCE TELECOM**
**75015 Paris (FR)**

(72) Inventeur: **BONALD, Thomas**
**78960, VOISINS LE BRETONNEUX (FR)**

(74) Mandataire: **Kohn, Philippe et al**
**Cabinet Philippe Kohn,**
**30, rue Hoche**
**93500 Pantin (FR)**

(56) Documents cités:
**US-A1- 2002 183 066     US-B1- 6 449 490**

## Description

La présente invention concerne un procédé de sélection de canal de transmission dans un protocole d'accès multiple à répartition dans le temps ainsi qu'un système de communication mettant en oeuvre le procédé de l'invention.

Dans l'état de la technique, on a déjà proposé pour des protocoles d'accès multiple à répartition dans le temps des procédés qui permettent de sélectionner un canal de transmission parmi une pluralité de canaux de transmission en fonction des conditions de transmission mesurées sur chacun de ces canaux. Ces procédés s'appliquent notamment au cas d'une transmission radio-fréquence entre une station de base et un ensemble de postes mobiles, la qualité de transmission de chaque canal qui relie la station de base à un poste mobile variant de manière indépendante en fonction de la mobilité du poste et de l'évolution de son environnement radio.

Ainsi une méthode décrite dans le document US-B1-6,449,490 consiste à :

■ recevoir pour chaque canal une valeur représentant le débit de transmission actuellement réalisable sur ce canal ;
■ déterminer pour chaque canal le débit de transmission réalisé sur ce canal sur une fenêtre temporelle ;
■ sélectionner le canal dont le ratio du débit de transmission actuellement réalisable au débit de transmission réalisé sur une fenêtre temporelle est le plus élevé.

L'intérêt de cette méthode par rapport à un procédé de sélection qui ne tient pas compte des variations de la qualité de transmission des canaux est d'accroître le débit de transmission de chaque canal en sélectionnant celui dont les conditions de transmission sont les plus favorables. La sélection se fait sur la base du ratio du débit de transmission réalisable au débit de transmission réalisé pour assurer un accès relativement équitable à la ressource de transmission. L'inconvénient de cette méthode est qu'un canal dont le débit réalisé serait limité pour une raison autre que le partage de la ressource de transmission (contrainte liée à la capacité de réception du poste mobile par exemple) pourrait être sélectionné systématiquement, même lorsque ses conditions de transmission sont mauvaises.

Une autre méthode visant à tirer profit des variations indépendantes de la qualité de transmission des canaux et décrite dans le même document consiste à :

■ recevoir pour chaque canal une indication périodique de la qualité de transmission de ce canal ;
■ calculer pour chaque canal la qualité moyenne de transmission de ce canal ;
■ sélectionner le canal dont le ratio de la dernière indication de qualité de transmission à la qualité moyenne de transmission est le plus élevé.

En appliquant cet enseignement de la technique, il s'avère que certains canaux se verraient attribuer une part de la ressource de transmission bien supérieure aux autres. De fait, la répartition de la ressource de transmission dépend de la distribution des variations aléatoires des conditions de transmission de l'ensemble des canaux. De plus, cette répartition de la ressource, et la qualité de transmission de chaque canal sélectionné qui en résulte, sont très difficiles à évaluer dès que les distributions des variations aléatoires des conditions de transmission des canaux diffèrent, ce qui est le cas en pratique.

La présente invention permet de porter remède à ces inconvénients de l'état de la technique. En effet, le procédé de l'invention permet de sélectionner le canal dont les conditions de transmission sont les meilleures, relativement aux conditions de transmission de ce canal sur une fenêtre temporelle, tout en garantissant un accès équitable à la ressource de transmission à l'ensemble des canaux, et ce quelles que soient les distributions des variations aléatoires des conditions de transmission des canaux. De plus, la qualité de transmission de chaque canal sélectionné est facile à évaluer et n'est fonction que de la distribution des variations aléatoires des conditions de transmission de ce canal, non de celles de l'ensemble des canaux.

En effet, l'invention concerne un procédé de sélection d'au moins un canal de transmission parmi une pluralité de canaux de transmission, dans un protocole d'accès multiple à répartition dans le temps. Selon l'invention, le procédé de sélection comprend les étapes consistant à :

■ recevoir pour chaque canal une indication périodique de la qualité de transmission de ce canal;
■ mémoriser pour chaque canal ces indications sur une fenêtre temporelle ;
■ sélectionner au moins un canal dont la position de l'indication de qualité de transmission actuelle par rapport aux indications de qualité de transmission mémorisées pour ce canal sur la fenêtre temporelle est la meilleure.

Selon un aspect de l'invention, l'étape de sélection d'au moins un canal est réalisée parmi une pluralité de canaux sur lesquels des données sont à transmettre et consiste à sélectionner parmi ces canaux au moins un canal dont la position de l'indication de qualité de transmission actuelle par rapport aux indications de qualité de transmission mémorisées pour ce canal sur la fenêtre temporelle est la meilleure ou sont parmi les meilleures.

Selon un autre aspect de l'invention, le procédé consiste à déterminer le nombre de canaux N, la fenêtre temporelle de taille T, et les valeurs initiales des qualités de transmission de chaque canal sur la fenêtre temporelle et en ce que ces paramètres peuvent être remis à jour par interruption du procédé à des moments décidés par un automate de réinitialisation, notamment lorsque le nombre de canaux N change du fait de l'activité des utilisateurs.

Selon un autre aspect de l'invention, le procédé consiste à exécuter à chaque unité de temps, ladite suite d'instructions consistant à :

■ exécuter une boucle pour déterminer pour chaque canal la position de l'indication de qualité de transmission actuelle par rapport à celles mémorisées pour ce canal sur la fenêtre temporelle ;
■ sélectionner parmi les canaux pour lesquels des données sont à transmettre au moins un canal dont la valeur est la meilleure ou parmi les meilleures ;
■ donner l'autorisation de transmission au moins au canal.

Selon un autre aspect de l'invention, la boucle consiste pour chaque canal à :

■ acquérir au moins une indication de qualité de transmission du canal, soit Ci(t) ;
■ initialiser une valeur de position Pi à 1 ;
■ exécuter une seconde boucle afin de déterminer une valeur indicatrice de la position Pi ;
■ exécuter une troisième boucle afin de mettre à jour les indications de qualité de transmission du canal sur la fenêtre temporelle.

Selon un autre aspect de l'invention, la seconde boucle consiste pour chaque index de boucle (k, k allant de 1 à T), à :

■ évaluer le résultat d'un test défini par la relation: Ci(t-k) > Ci(t) ;
■ incrémenter l'indication de position Pi de une unité si le résultat du test est positif ;
■ sinon, évaluer le résultat d'un test défini par la relation ; (Ci(t-k) == Ci(t)) ET (RAND < 1) où RAND est une fonction retournant une variable aléatoire, notamment uniformément distribuée sur l'intervalle [0,2] ;
■ exécuter à nouveau l'étape d'incrémentation de l'indication de position Pi si le résultat du test est positif.

Selon un autre aspect de l'invention, la troisième boucle consiste pour chaque index de boucle (k, k allant de T à 1), à :

■ affecter la valeur préalablement enregistrée Ci(t-k+1) à la variable Ci(t-k).

Selon un autre aspect de l'invention, une convention telle qu'un choix aléatoire est appliquée lorsque plusieurs canaux pour lesquels des données sont à transmettre ont une indication de position Pi minimum.

Selon un autre aspect de l'invention, le procédé consiste, si plusieurs canaux sont autorisés à transmettre simultanément, à sélectionner parmi les canaux pour lesquels des données sont à transmettre ceux dont la position Pi est la meilleure et à donner l'autorisation de transmission à ces canaux.

Selon un autre aspect de l'invention, le second test exécute une convention prédéterminée pour calculer la position Pi lorsque l'indication de qualité de transmission actuelle du canal, soit Ci(t), est égale à une ou plusieurs valeurs sur la fenêtre temporelle.

Selon un autre aspect de l'invention, les boucles sont, partiellement ou en totalité, traitées en parallèle et non de manière séquentielle.

L'invention concerne aussi un système de communication mettant en oeuvre le procédé de l'invention, caractérisé en ce qu'il comporte :

■ un moyen pour recevoir pour au moins un canal une indication périodique de qualité de transmission de ce canal;
■ une mémoire pour enregistrer les indications de qualité de transmission de chaque canal sur une fenêtre temporelle ;
■ un circuit de calcul pour déterminer, pour chaque canal pour lequel une indication périodique de qualité de transmission a été reçue, la position de l'indication de qualité de transmission actuelle de ce canal par rapport à celles mémorisées pour ce canal sur la fenêtre temporelle ;
■ un circuit de sélection d'au moins un canal de transmission dont la position de l'indication de qualité de transmission actuelle par rapport à celles mémorisées pour ce canal sur la fenêtre temporelle est la meilleure ou parmi les meilleures.

Selon un autre aspect de l'invention, le circuit de sélection d'au moins un canal de transmission comporte un moyen de sélection de canaux parmi un ensemble de canaux sur lesquels des données sont à transmettre et dont la position de l'indication de qualité de transmission actuelle par rapport aux positions mémorisées pour ce canal ou ces canaux sur la fenêtre temporelle est la meilleure ou parmi les meilleures.

Selon un autre aspect de l'invention, le système comporte au moins un circuit d'acquisition du signal de qualité de transmission du canal, soit Ci(t) à la date t.

Selon un autre aspect de l'invention, le système comporte au moins une mémoire constituée de T blocs, chaque bloc k contenant la valeur de qualité de transmission du canal i à la date (t-k), soit Ci(t-k), pour k allant de 1 à T.

Selon un autre aspect de l'invention, le système comporte au moins un ensemble de T circuits de comparaison, chaque circuit comparant l'indication de qualité de transmission actuelle contenue dans au moins le circuit d'acquisition et l'indication de qualité de transmission à la date t-k contenue dans le bloc de mémoire k, pour k allant de 1 à T.

Selon un autre aspect de l'invention, le système comporte au moins un additionneur, en entrée duquel est connectée la sortie de chaque circuit de comparaison, pour k allant de 1 à T, ainsi qu'une entrée indépendante donnant toujours la valeur 1.

Les caractéristiques et avantages de la présente invention seront mieux compris à l'aide des dessins annexés et décrits ci-dessous :

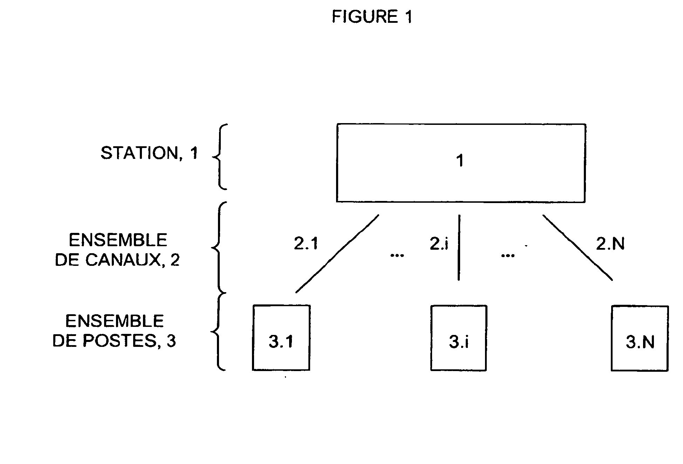

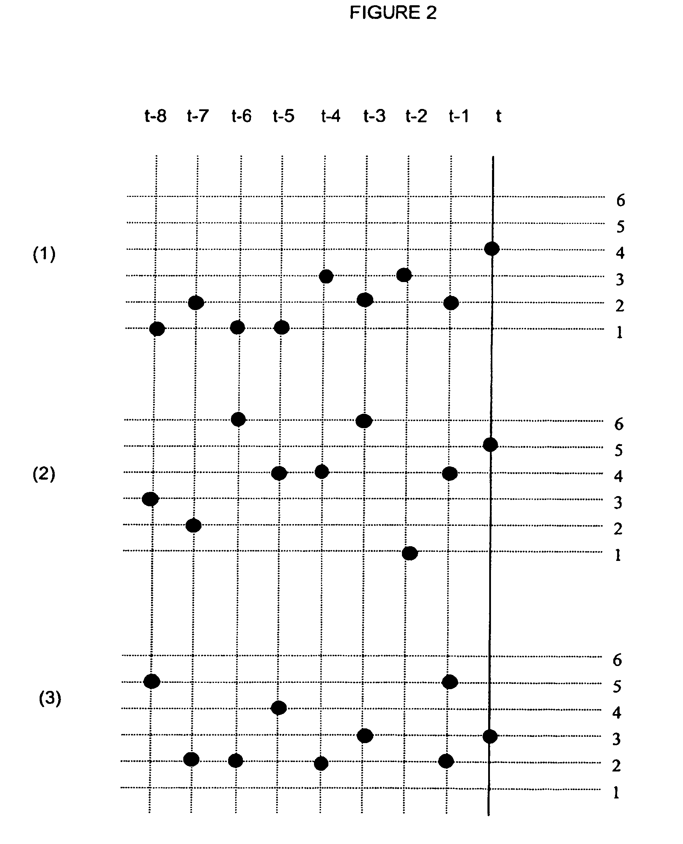

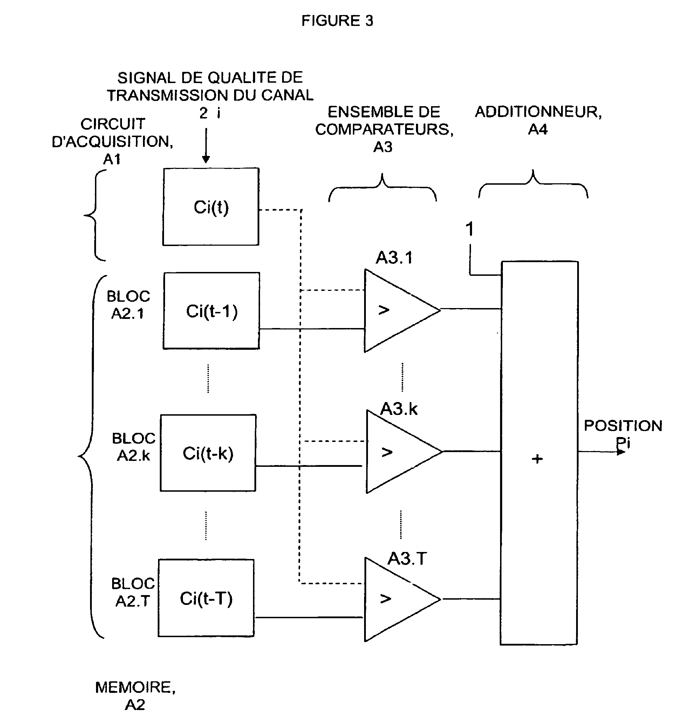

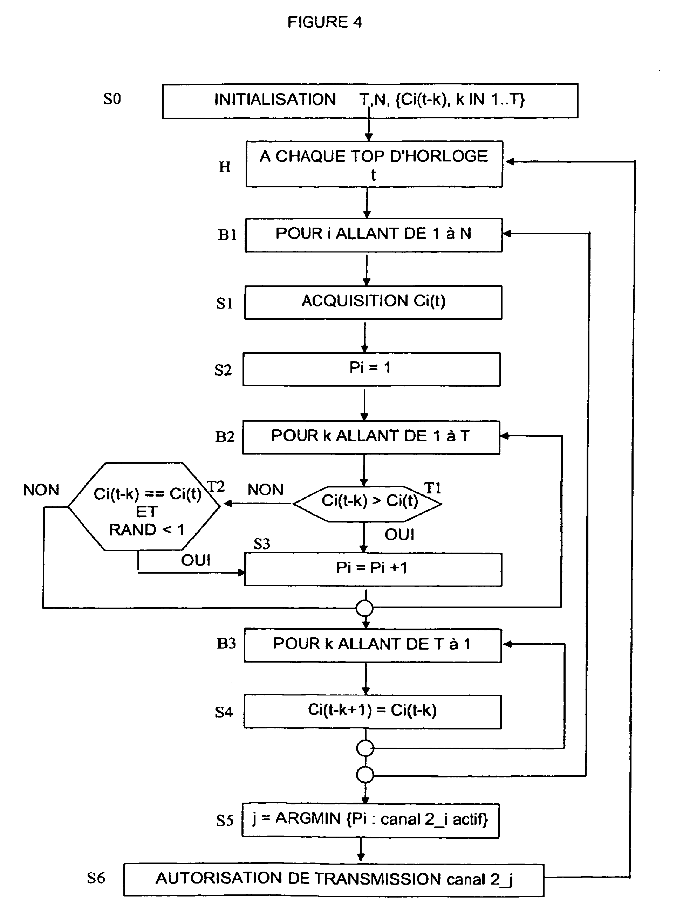

■ la figure 1 est un schéma bloc représentant un système de communication utilisé dans l'invention ;
■ la figure 2 est un diagramme temporel représentant l'évolution de la qualité de transmission de trois canaux et permettant d'expliquer le procédé de l'invention ;
■ la figure 3 est un schéma bloc représentant un système de calcul de la position de l'indication de qualité de transmission actuelle d'un canal par rapport à celles mémorisées pour ce canal, permettant de sélectionner le canal de transmission selon le procédé de l'invention ;
■ la figure 4 est un organigramme du procédé de l'invention.

À la figure 1, on a représenté l'architecture simplifiée d'un système de communication utilisant un protocole d'accès multiple à répartition dans le temps. Un tel système de communication comporte une station commune 1, maître à l'égard d'un ensemble 3 de N postes qui partagent une même ressource de transmission. Bien que le nombre de postes N est choisi fixe dans la présente description, il est clair que ce nombre peut varier en pratique en fonction de l'activité des utilisateurs partageant le système de communication. Un ensemble 2 de N canaux de transmission relie la station à l'ensemble 3 des postes. On note 2_i le canal de transmission reliant la station 1 au poste 3_i, pour i allant de 1 à N. À un instant donné, le canal 2_i est dit actif si des données sont à transmettre sur ce canal, inactif sinon. L'accès à la ressource de transmission se fait en général de manière séquentielle, l'autorisation de transmission étant donnée à tout instant par la station 1 à un et un seul des canaux 2_i. Dans un mode particulier de réalisation, la station peut cependant autoriser plusieurs canaux à transmettre simultanément.

Chaque canal 2_i est en général un canal de communication hertzienne dont la qualité dépend notamment de la distance séparant la station 1 du poste correspondant 3_i et des interférences induites par divers phénomènes radio électriques sur le trajet de l'onde hertzienne. Dans un mode particulier de réalisation, les transmissions s'effectuent dans le sens descendant, c'est-à-dire de la station 1 vers l'ensemble 3 des postes. La qualité de transmission de chaque canal 2_i est alors mesurée sur le poste correspondant 3_i, au moyen par exemple d'un signal pilote émis par la station 1, et une indication de cette qualité de transmission est envoyée périodiquement par le poste 3_i vers la station 1, éventuellement sur un canal distinct du canal de transmission 2_i. Lorsque cette indication de qualité de transmission n'est pas reçue par la station 1 ou est erronée, une valeur arbitraire est utilisée, comme la dernière indication de qualité de transmission reçue par exemple. Dans un autre mode de réalisation, les transmissions s'effectuent dans le sens montant, c'est-à-dire de l'ensemble 3 des postes vers la station 1. La qualité de transmission de chaque canal est alors mesurée directement par la station 1.

La station 1 sélectionne parmi les canaux actifs celui dont la position de l'indication de qualité de transmission actuelle par rapport à celles mémorisées est la meilleure, selon un procédé détaillé ci-après, et autorise ce canal à transmettre pendant une certaine durée. Dans un mode particulier de réalisation, cette autorisation n'est effective que si la ressource de transmission est disponible, celle-ci pouvant être utilisée par l'un des canaux ayant précédemment été autorisé à transmettre et étant toujours autorisé à transmettre, ou par un canal n'appartenant pas à l'ensemble 2 des canaux considérés. Dans un mode particulier de réalisation où la station 1 autorise éventuellement plusieurs canaux à transmettre simultanément, les canaux sélectionnés sont ceux dont les positions de l'indication de qualité de transmission actuelle par rapport à celles mémorisées respectivement pour chacun de ces canaux sont les meilleures.

À la figure 2, on a représenté un diagramme temporel représentant l'évolution de la qualité de transmission de N = 3 canaux et permettant d'expliquer le principe de sélection de canal mis en oeuvre par le procédé de l'invention. Dans cet exemple, les indications de qualité de transmission peuvent prendre un ensemble de six valeurs 1,2,3,4,5,6, correspondant à une qualité de transmission croissante : la valeur 1 indique une mauvaise qualité de transmission, la valeur 6 une bonne qualité de transmission. Les ensembles de valeurs (1), (2) et (3) donnent les indications de qualité de transmission reçues par la station 1 à chaque unité de temps pour les canaux 2_1, 2_2 et 2_3, respectivement, et mémorisées sur une fenêtre temporelle choisie ici de taille T = 8 unités de temps. On note $C_i(t)$ l'indication de qualité de transmission du canal 2_i à la date t, et $P_i(t)$ la position de cette valeur par rapport à celles mémorisées sur la fenêtre temporelle.

On peut lire sur le diagramme (1) que l'indication de qualité de transmission du canal 2_1 à la date actuelle t est $C_1(t) = 4$, tandis que les valeurs mémorisées pour ce canal sur la fenêtre temporelle sont $C_1(t-k) = 2,3,2,3,1,1,2,1$, pour k allant de 1 à T. Comme $C_1(t) > C_1(t-k)$ pour k allant de 1 à T, la qualité de transmission actuelle est en première position par rapport à celles mémorisées sur la fenêtre temporelle, soit $P_1(t) = 1$. De la même manière, on peut lire sur le diagramme (2) que l'indication de qualité de transmission du canal 2_2 à la date actuelle t est $C_2(t) = 5$, en troisième position par rapport à celles mémorisées sur la fenêtre temporelle, soit P2(t) = 3. Lorsque l'indication de la qualité de transmission actuelle d'un canal est égale à une ou plusieurs valeurs mémorisées sur la fenêtre temporelle, on adopte une convention pour décider de sa position. Ainsi on peut lire sur le diagramme (3) que l'indication de qualité de transmission du canal 2_3 à la date actuelle t est C3(t) = 3, égale à la valeur C3(t-3), en quatrième ou en cinquième position par rapport à celles mémorisées sur la fenêtre temporelle selon la convention choisie. Dans un mode particulier de réalisation, la position de l'indication de qualité de transmission actuelle par rapport à celles mémorisées de même valeur est choisie de manière aléatoire. Ainsi, selon le résultat d'un test aléatoire, la position de l'indication de qualité de transmission actuelle du canal 2_3 sera P3(t) = 4 ou P3(t) = 5.

Le canal sélectionné à la date t est le canal actif dont la position de la qualité de transmission actuelle est la meilleure. Comme P1 (t) < P2(t) < P3(t) dans le cas de la figure 2, le canal sélectionné est le canal 2_1 si ce canal est actif, le canal 2_2 si le canal 2_1 est inactif et le canal 2_2 est actif, le canal 2_3 si les canaux 2_1 et 2_2 sont inactifs. Lorsque parmi les canaux actifs, plusieurs atteignent la valeur minimum Pi(t), on adopte une convention pour décider lequel de ces canaux sélectionner. Dans un mode particulier de réalisation, on choisit l'un de ces canaux de façon aléatoire.

Dans un mode de réalisation où la station autorise éventuellement plusieurs canaux à transmettre simultanément, les canaux sélectionnés sont les canaux actifs dont les positions de l'indication de qualité de transmission actuelle par rapport à celles mémorisées respectivement pour chacun de ces canaux sur la fenêtre temporelle sont les meilleures. Comme P1 (t) < P2(t) < P3(t) dans le cas de la figure 2, on obtient, en supposant par exemple que les trois canaux sont actifs, que les canaux sélectionnés sont le canal 2_1, les canaux 2_1 et 2_2, ou les trois canaux, selon le nombre de canaux à sélectionner. Comme précédemment, on adopte une convention en cas d'égalité des positions Pi(t) de différents canaux, comme un choix aléatoire d'un sous-ensemble de ces canaux par exemple.

À la figure 3, on a représenté l'architecture simplifiée d'un système de calcul de la position Pi(t) de la qualité de transmission d'un canal 2_i à la date t par rapport aux valeurs précédentes mémorisées sur la fenêtre temporelle. Ce système comporte principalement :

■ un circuit d'acquisition A1 du signal de qualité de transmission du canal 2_i, soit Ci(t) à la date t ;
■ une mémoire A2 constituée de T blocs, chaque bloc A2.k contenant la valeur de qualité de transmission du canal 2_i à la date t-k, soit Ci(t-k), pour k allant de 1 à T ;
■ un ensemble A3 de T circuits de comparaison, chaque circuit A3.k comparant l'indication de qualité de transmission actuelle contenue dans le circuit A1 et l'indication de qualité de transmission à la date t-k contenue dans le bloc de mémoire A2.k, pour k allant de 1 à T ; et
■ un additionneur A4, en entrée duquel est connectée la sortie de chaque circuit de comparaison A3.k, pour k allant de 1 à T, ainsi qu'une entrée indépendante donnant toujours la valeur 1.

À la date t, les valeurs de qualité de transmission du canal 2_i contenues précédemment dans le circuit A1 et la mémoire A2, qui ont été mises à jour à la date t-1, sont décalées de sorte que le bloc A2.1 contient à la date t la valeur Ci(t-1) précédemment contenue dans le circuit d'acquisition A1, et chaque bloc A2.k contient à la date t la valeur Ci(t-k) précédemment contenue dans le bloc A2.(k-1), pour k allant de 2 à T. La qualité de transmission du canal 2_i à la date t, soit Ci(t), est acquise par le circuit A1.

Chaque circuit de comparaison A3.k retourne la valeur 1 si Ci(t) < Ci(t-k) et 0 si Ci(t) > Ci(t-k). Si Ci(t) = Ci(t-k), le circuit A3.k retourne la valeur 0 selon un mode de réalisation, la valeur 1 selon un autre mode de réalisation, la valeur 1 si le résultat d'un test aléatoire est positif, la valeur 0 sinon, selon un troisième mode de réalisation. La position Pi(t) de l'indication de qualité de transmission du canal 2_i à la date t par rapport à celles mémorisées pour ce canal sur la fenêtre temporelle est donnée en sortie de l'additionneur A4.

À la figure 4, on donne l'organigramme d'un mode de réalisation du procédé de l'invention.

Lors d'une étape S0, le nombre de canaux N, la fenêtre temporelle T, et les valeurs des qualités de transmission de chaque canal sur la fenêtre temporelle sont initialisés. Ces paramètres peuvent être remis à jour par interruption du procédé à des moments décidés par un automate de réinitialisation, notamment lorsque le nombre de canaux N change du fait de l'activité des utilisateurs, ainsi que mentionné ci-avant. La détermination de l'automate de réinitialisation n'est pas dans l'objet de la présente demande.

Le contrôle exécute alors à chaque unité de temps, piloté par une horloge H, une suite d'instructions qui peut être interrompue notamment par l'automate de réinitialisation mentionné ci-dessus. Cette suite d'instructions consiste à :

■ exécuter la boucle B1 décrite ci-après afin de déterminer pour chaque canal 2_i la position Pi de l'indication de qualité de transmission actuelle par rapport à celles mémorisées pour ce canal sur la fenêtre temporelle ;
■ sélectionner au cours d'une étape S5 parmi les canaux actifs un canal 2_j dont la valeur Pj est minimum ;
■ donner au cours d'une étape S6 l'autorisation de transmission au canal 2_j.

La boucle B1 consiste pour chaque canal 2_i, i allant de 1 à N, à :

■ acquérir au cours d'une étape S1 une indication de qualité de transmission du canal 2_i, soit Ci(t) ;
■ initialiser au cours d'une étape S2 la valeur de Pi à 1 ;
■ exécuter la boucle B2 décrite ci-après afin de déterminer la valeur de Pi ;
■ exécuter la boucle B3 décrite ci-après afin de mettre à jour les indications de qualité de transmission du canal 2_i sur la fenêtre temporelle.

La boucle B2 consiste pour chaque k, k allant de 1 à T, à :

■ évaluer le résultat du test T1 : Ci(t-k) > Ci(t) ;
■ incrémenter Pi de une unité lors d'une étape S3 si le résultat du test T1 est positif ;
■ sinon, évaluer le résultat du test T2 : (Ci(t-k) == Ci(t)) ET (RAND < 1) où RAND est une fonction retournant une variable aléatoire uniformément distribuée sur l'intervalle [0,2] ;
■ exécuter l'étape S3 si le résultat du test T2 est positif.

La boucle B3 consiste pour chaque k, k allant de T à 1, à :

■ affecter la valeur Ci(t-k+1) à la variable Ci(t-k) au cours d'une étape S4.

Il est clair qu'une convention telle qu'un choix aléatoire est appliquée à l'étape S4 lorsque plusieurs canaux actifs ont une valeur Pi minimum. Il est également clair que, dans un mode particulier de réalisation où la station 1 autorise plusieurs canaux à transmettre simultanément, l'étape S4 consiste à sélectionner parmi les canaux actifs ceux dont la valeur Pi est la plus petite et l'étape S5 consiste à donner l'autorisation de transmission à ces canaux.

Il est clair que toute autre convention que le choix aléatoire du test T2 peut être appliquée pour calculer la valeur de Pi lorsque l'indication de qualité de transmission actuelle du canal, soit Ci(t), est égale à une ou plusieurs valeurs de la fenêtre temporelle.

Il est clair que les boucles B1, B2, B3 peuvent être, partiellement ou en totalité, traitées en parallèle et non de manière séquentielle.

## Revendications

1.   Procédé de sélection d'au moins un canal de transmission parmi une pluralité de canaux de transmission, dans un protocole d'accès multiple à répartition dans le temps, **caractérisé en ce qu'**il comprend les étapes consistant à :

■ recevoir (S1) pour chaque canal une indication périodique de la qualité de transmission de ce canal ;
■ mémoriser (B2) pour chaque canal ces indications sur une fenêtre temporelle ;
■ sélectionner (S5) au moins un canal dont la position de l'indication de qualité de transmission actuelle par rapport aux indications de qualité de transmission mémorisées pour ce canal sur la fenêtre temporelle est la meilleure.

2.   Procédé de sélection selon la revendication 1, **caractérisé en ce que** l'étape de sélection d'au moins un canal est réalisée parmi une pluralité de canaux sur lesquels des données sont à transmettre et parmi ces canaux au moins un canal dont la position de l'indication de qualité de transmission actuelle par rapport aux indications de qualité de transmission mémorisées pour ce canal sur la fenêtre temporelle est la meilleure ou sont parmi les meilleures.

3.   Procédé selon l'une quelconque des revendications 1 ou 2, **caractérisé en ce qu'**il consiste lors d'une étape (S0), à déterminer le nombre de canaux N, la taille de la fenêtre temporelle T, et les valeurs initiales des qualités de transmission de chaque canal sur la fenêtre temporelle et **en ce que** ces paramètres peuvent être remis à jour par interruption du procédé à des moments décidés par un automate de réinitialisation, notamment lorsque le nombre de canaux N change du fait de l'activité des utilisateurs.

4.   Procédé selon la revendication 3, **caractérisé en ce qu'**il consiste à exécuter à chaque unité de temps, ladite suite d'instructions consistant à :

■ exécuter une boucle (B1) pour déterminer pour chaque canal (2_i) la position (Pi) de l'indication de qualité de transmission actuelle par rapport à celles mémorisées pour ce canal sur la fenêtre temporelle ;
■ sélectionner au cours d'une étape (S5) parmi les canaux pour lesquels des données sont à transmettre au moins un canal (2_j) dont la valeur (Pj) est la meilleure ou parmi les meilleures ;
■ donner au cours d'une étape (S6) l'autorisation de transmission au moins au canal (2_j).

5.   Procédé selon la revendication 4, **caractérisé en ce que** la boucle (B1) consiste pour chaque canal (2_i, i allant de 1 à N), à :

■ acquérir au cours d'une étape (S1) une indication de qualité de transmission du canal (2_i), soit Ci(t) ;
■ initialiser au cours d'une étape (S2) une valeur de position Pi à 1 ;
■ exécuter une seconde boucle (B2) afin de déterminer une valeur indicatrice de la position (Pi) ;

■ exécuter une troisième boucle (B3) afin de mettre à jour les indications de qualité de transmission du canal (2_i) sur la fenêtre temporelle.

6. Procédé selon la revendication 5, **caractérisé en ce que** la boucle (B2) consiste pour chaque index de boucle (k, k allant de 1 à T), à :

■ évaluer le résultat d'un test (T1) défini par la relation: Ci(t-k) > Ci(t) ;
■ incrémenter l'indication de position (Pi) d'une unité lors d'une étape (S3) si le résultat du test (T1) est positif ;
■ sinon, évaluer le résultat d'un test (T2) défini par la relation ; (Ci(t-k) == Ci(t)) ET (RAND < 1) où RAND est une fonction retournant une variable aléatoire, notamment uniformément distribuée sur l'intervalle [0,2] ;
■ exécuter l'étape (S3) d'incrémentation de l'indication de position (Pi) si le résultat du test (T2) est positif.

7. Procédé selon la revendication 5, **caractérisé en ce que** la boucle (B3) consiste pour chaque index de boucle (k, k allant de T à 1), à :

■ affecter la valeur préalablement enregistrée Ci(t-k+1) à la variable Ci(t-k) au cours d'une étape (S4).

8. Procédé selon la revendication 7, **caractérisé en ce que** une convention telle qu'un choix aléatoire est appliquée à l'étape (S4) lorsque plusieurs canaux actifs ont une indication de position (Pi) minimum.

9. **Procédé selon la revendication 7 ou 8, caractérisé en ce que**, si plusieurs canaux sont autorisés à transmettre simultanément, l'étape (S4) consiste à sélectionner parmi les canaux pour lesquels des données sont à transmettre ceux dont la position (Pi) est la meilleure et **en ce qu'**une étape (S5) consiste à donner l'autorisation de transmission à ces canaux.

10. Procédé selon la revendication 6, **caractérisé en ce que** le second test (T2) exécute une convention prédéterminée pour calculer l'indication de position (Pi) lorsque l'indication de qualité de transmission actuelle du canal, soit Ci(t), est égale à une ou plusieurs valeurs de la fenêtre temporelle.

11. Procédé selon l'une au moins des revendications 4 à 7, **caractérisé en ce que** les boucles (B1, B2, B3) sont, partiellement ou en totalité, traitées en parallèle et non de manière séquentielle.

12. Système de communication du genre dans lequel au moins un canal de transmission est sélectionné parmi une pluralité de canaux de transmission, dans un protocole d'accès multiple à répartition dans le temps, **caractérisé en ce qu'**il comporte :

■ un moyen (A1) pour recevoir pour au moins un canal une indication périodique de qualité de transmission de ce canal ;
■ une mémoire (A2) pour enregistrer les indications de qualité de transmission de chaque canal pendant une fenêtre temporelle ;
■ un circuit de calcul (A2.1 - A2.T) pour déterminer, pour chaque canal pour lequel une indication périodique de qualité de transmission a été reçue, la position de l'indication de qualité de transmission actuelle de ce canal par rapport à celles mémorisées pour ce canal sur la fenêtre temporelle ;
■ un circuit de sélection (A3, A4) d'au moins un canal de transmission dont la position de l'indication de qualité de transmission actuelle par rapport à celles mémorisées pour ce canal sur la fenêtre temporelle est la meilleure.

13. Système de communication selon la revendication 12, **caractérisé en ce que** le circuit de sélection d'au moins un canal de transmission comporte un moyen de sélection de canaux sur lesquels des données sont à transmettre et dont la position de l'indication de qualité de transmission actuelle par rapport aux positions mémorisées pour ce canal ou ces canaux sur la fenêtre temporelle est la meilleure ou parmi les meilleures.

14. Système de communication selon l'une quelconque des revendications 12 ou 13, **caractérisé en ce qu'**il comporte au moins un circuit d'acquisition (A1) du signal de qualité de transmission du canal (2_i), soit Ci(t) à la date t.

15. Système de communication selon l'une quelconque des revendications 12 ou 13, **caractérisé en ce qu'**il comporte au moins une mémoire (A2) constituée de T blocs, chaque bloc (A2.k) contenant la valeur de qualité de transmission du canal (2_i) à la date (t-k), soit Ci(t-k), pour k allant de 1 à T.

16. Système de communication selon l'une quelconque des revendications 12 ou 13, **caractérisé en ce qu'**il comporte au moins un ensemble (A3) d'au plus T circuits de comparaison, chaque circuit (A3.k) comparant l'indication de qualité de transmission actuelle contenue dans au moins le circuit (A1) et l'indication de qualité de transmission à la date t-k contenue dans le bloc de mémoire (A2.k), pour k allant de 1 à T.

17. Système de communication selon l'une quelconque des revendications 12 ou 13, **caractérisé en ce qu'**il comporte au moins un additionneur (A4), en entrée duquel est connectée la sortie de chaque circuit de comparaison (A3.k), pour k allant de 1 à T, ainsi qu'une entrée indépendante donnant toujours la valeur 1.

## Claims

1. Method of selecting at least one transmission channel from a plurality of transmission channels, in a time division multiple access protocol, **characterized in that** it comprises the steps consisting in:

   ■ Receiving (S1) for each channel a periodic indication of the transmission quality of that channel;
   ■ storing (B2) these indications for each channel during a time window;
   ■ selecting (S5) at least one channel that has the best current transmission quality indication position relative to the transmission quality indications stored for that channel during the time window.

2. Method of selection according to Claim 1, **characterized in that** the step of selecting at least one channel is carried out from a plurality of channels over which data are to be transmitted and from these channels at least one channel that has the best or amongst the best current transmission quality indication position(s) relative to the transmission quality indications stored for that channel during the time window.

3. Method according to either one of Claims 1 and 2, **characterized in that** it consists, during a step (S0), in determining the number of channels N, the size of the time window T and the initial values of the transmission qualities of each channel during the time window and **in that** these parameters may be updated by interrupting the method at moments chosen by a reinitialization finite state machine, particularly when the number of channels N changes due to the activity of the users.

4. Method according to Claim 3, **characterized in that** it consists in executing, during each unit of time, the said series of instructions consisting in:

   ■ executing a loop (B1) to determine for each channel (2_i) the position (Pi) of the current transmission quality indication relative to those stored for that channel during the time window;
   ■ selecting, during a step (S5), from the channels for which data are to be transmitted at least one channel (2_j) that has the best or amongst the best value(s) (Pj);
   ■ during a step (S6), giving transmission authorization at least to the channel (2_j).

5. Method according to Claim 4, **characterized in that** the loop (B1) consists, for each channel (2_i, where i is from 1 to N), in:

   ■ acquiring, during a step (S1), a transmission quality indication of the channel (2_i), that is Ci (t);
   ■ initializing, during a step (S2), a value of position Pi at 1;
   ■ executing a second loop (B2) in order to determine a value indicative of the position (Pi);
   ■ executing a third loop (B3) in order to update the transmission quality indications of the channel (2_i) during the time window.

6. Method according to Claim 5, **characterized in that** the loop (B2) consists, for each loop index (k, where k is from 1 to T), in:

   ■ evaluating the result of a test (T1) defined by the relation: Ci(t-k) > Ci(t);
   ■ incrementing the indication of position (Pi) by one unit during a step (S3) if the result of the test (T1) is positive;
   ■ otherwise, evaluating the result of a test (T2) defined by the relation (Ci(t-k) == Ci(t)) AND (RAND < 1) where RAND is a function returning a random variable, in particular uniformly distributed over the interval [0,2];
   ■ executing the step (S3) of incrementing the indication of position (Pi) if the result of the test (T2) is positive.

7. Method according to Claim 5, **characterized in that** the loop (B3) consists, for each loop index (k, where k is from T to 1), in:

   ■ assigning the previously stored value Ci(t-k+1) to the variable Ci(t-k) during a step (S4).

8. Method according to Claim 7, **characterized in that** a convention such as a random choice is applied to the step (S4) when several active channels have a minimum indication of position (Pi).

9. Method according to either Claim 7 or 8, **characterized in that** if several channels are authorized to transmit simultaneously, the step (S4) consists in selecting from the channels for which data are to be transmitted those that have the best position (Pi) and **in that** a step (S5) consists in giving transmission authorization to those channels.

10. Method according to Claim 6, **characterized in that** the second test (T2) executes a predetermined convention to compute the indication of position (Pi) when the current transmission quality indication of the channel, that is Ci(t), is equal to one or more values of the time window.

11. Method according to at least one of Claims 4 to 7, **characterized in that** the loops (B1, B2, B3) are, partially or wholly, processed in parallel and not sequentially.

12. Communication system of the kind in which at least one transmission channel is selected from a plurality of transmission channels, in a time division multiple access protocol, **characterized in that** it comprises:

■ a means (A1) for receiving, for at least one channel, a periodic indication of transmission quality of that channel;
■ a memory (A2) for storing the transmission quality indications of each channel during a time window;
■ a computing circuit (A2.1 - A2.T) to determine, for each channel for which a periodic indication of transmission quality has been received, the position of the current transmission quality indication of that channel relative to those stored for that channel during the time window;
■ a circuit (A3, A4) for selecting at least one transmission channel that has the best current transmission quality indication position relative to those stored for that channel during the time window.

13. - Communication system according to Claim 12, **characterized in that** the circuit for selecting at least one transmission channel comprises a means of selecting channels over which data are to be transmitted and that have the best or one amongst the best current transmission quality indication position(s) relative to the positions stored for that channel or those channels during the time window.

14. - Communication system according to either one of Claims 12 and 13, **characterized in that** it comprises at least one circuit (A1) for acquiring the transmission quality signal of the channel (2_i), that is Ci (t) on the date t.

15. - Communication system according to either one of Claims 12 and 13, **characterized in that** it comprises at least one memory (A2) consisting of T blocks, each block (A2.k) containing the value of transmission quality of the channel (2_i) on the date (t-k), that is Ci(t-k), where k is from 1 to T.

16. - Communication system according to either one of Claims 12 and 13, **characterized in that** it comprises at least one set (A3) of at most T comparison circuits, each circuit (A3.k) comparing the current transmission quality indication contained in at least the circuit (A1) with the transmission quality indication on the date t-k contained in the memory block (A2.k), where k is from 1 to T.

17. -Communication system according to either one of Claims 12 and 13, **characterized in that** it comprises at least one adder (A4), to the input of which is connected the output of each comparison circuit (A3.k), where k is from 1 to T, and an independent input always giving the value 1.

**Patentansprüche**

1. Verfahren zur Auswahl mindestens eines Übertragungskanals unter mehreren Übertragungskanälen in einem ZeitmultiplexVerfahren, **dadurch gekennzeichnet, dass** es die Schritte umfasst, die darin bestehen :

• für jeden Kanal eine periodische Übertragungsqualitätsanzeige dieses Kanals zu empfangen (S1);
• für jeden Kanal diese Anzeigen in einem Zeitfenster zu speichern (B2);
• mindestens einen Kanal auszuwählen (S5), dessen Position der aktuellen Übertragungsqualitätsanzeige im Vergleich mit den für diesen Kanal im Zeitfenster gespeicherten Übertragungsqualitätsanzeigen die beste ist.

2. Auswahlverfahren nach Anspruch 1, **dadurch gekennzeichnet, dass** der Schritt der Auswahl mindestens eines Kanals unter mehreren Kanälen durchgeführt wird, auf denen Daten übertragen werden sollen, und unter diesen Kanälen mindestens eines Kanals, dessen Position der aktuellen Übertragungsqualitätsanzeige im Vergleich mit den für diesen Kanal im Zeitfenster gespeicherten Übertragungsqualitätsanzeigen die beste oder unter den besten ist.

3. Verfahren nach einem der Ansprüche 1 oder 2, **dadurch gekennzeichnet, dass** es in einem Schritt (S0) darin besteht, die Anzahl von Kanälen N, die Größe des Zeitfensters T und die Anfangswerte der Übertragungsqualitäten jedes Kanals im Zeitfenster zu bestimmen, und dass diese Parameter durch Unterbrechung des Verfahrens in durch einen Reinitialisierungsautomaten bestimmten Momenten aktualisiert werden können, insbesondere, wenn die Anzahl N von Kanälen sich aufgrund der Aktivität der Benutzer ändert.

4. Verfahren nach Anspruch 3, **dadurch gekennzeichnet, dass** es darin besteht, in jeder Zeiteinheit die Folge von Anweisungen auszuführen, die darin besteht:

• eine Schleife (B1) auszuführen, um für jeden Kanal (2_i) die Position (Pi) der aktuellen Übertragungsqualitätsanzeige im Vergleich mit den für diesen Kanal im Zeitfenster gespeicherten Anzeigen zu bestimmen;
• während eines Schritts (S5) unter den Kanälen, für die Daten zu übertragen sind, mindestens einen Kanal (2_j) auszuwählen, dessen Wert (Pj) der beste oder unter den besten ist;
• während eines Schritts (S6) mindestens dem Kanal (2_j) die Übertragungserlaubnis zu geben.

5. Verfahren nach Anspruch 4, **dadurch gekennzeichnet, dass** die Schleife (B1) für jeden Kanal (2_i, mit i von 1 bis N) darin besteht:

• während eines Schritts (S1) eine Übertragungsqualitätsanzeige des Kanals (2_i), nämlich Ci(t) zu erfassen;
• während eines Schritts (S2) einen Positionswert Pi auf 1 zu initialisieren;
• eine zweite Schleife (B2) auszuführen, um einen die Position (Pi) anzeigenden Wert zu bestimmen;
• eine dritte Schleife (B3) auszuführen, um die Übertragungsqualitätsanzeigen des Kanals (2_i) im Zeitfenster zu aktualisieren.

6. Verfahren nach Anspruch 5, **dadurch gekennzeichnet, dass** die Schleife (B2) für jeden Schleifenindex (k, mit k von 1 bis T) darin besteht:

• das Ergebnis eines Tests (T1) auszuwerten, der durch die folgende Beziehung definiert wird:

$$Ci(t-k) > Ci(t);$$

• die Positionsanzeige (Pi) in einem Schritt (S3) um eine Einheit zu inkrementieren, wenn das Ergebnis des Tests (T1) positiv ist;
• ansonsten das Ergebnis eines Tests (T2) auszuwerten, das durch die folgende Beziehung definiert wird: (Ci (t-k) == Ci(t)) UND (RAND < 1), wobei RAND eine Funktion ist, die eine zufällige Variable zurücksendet, die insbesondere gleichmäßig im Intervall [0,2] verteilt ist;
• den Schritt (S3) der Inkrementierung der Positionsanzeige (Pi) auszuführen, wenn das Ergebnis des Tests (T2) positiv ist.

7. Verfahren nach Anspruch 5, **dadurch gekennzeichnet, dass** die Schleife (B3) für jeden Schleifenindex (k, mit k von T bis 1) darin besteht:

• den vorher gespeicherten Wert Ci(t-k+1) der Variablen Ci(t-k) während eines Schritts (S4) zuzuteilen.

8. Verfahren nach Anspruch 7, **dadurch gekennzeichnet, dass** eine Vereinbarung wie eine zufällige Auswahl im Schritt (S4) angewendet wird, wenn mehrere aktive Kanäle eine minimale Positionsanzeige (Pi) haben.

9. Verfahren nach Anspruch 7 oder 8, **dadurch gekennzeichnet, dass**, wenn mehrere Kanäle autorisiert sind, gleichzeitig zu übertragen, der Schritt (S4) darin besteht, unter den Kanälen, für die Daten zu übertragen sind, diejenigen auszuwählen, deren Position (Pi) die beste ist, und dass ein Schritt (S5) darin besteht, diesen Kanälen die Übertragungsgenehmigung zu erteilen.

10. Verfahren nach Anspruch 6, **dadurch gekennzeichnet, dass** der zweite Test (T2) eine vorbestimmte Vereinbarung ausführt, um die Positionsanzeige (Pi) zu berechnen, wenn die aktuelle Übertragungsqualitätsanzeige des Kanals, nämlich Ci(t), gleich einem oder mehreren Werten des Zeitfensters ist.

11. Verfahren nach mindestens einem der Ansprüche 4 bis 7, **dadurch gekennzeichnet, dass** die Schleifen (B1, B2, B3) teilweise oder ganz parallel und nicht sequenziell verarbeitet werden.

12. Kommunikationssystem von der Art, bei dem mindestens ein Übertragungskanal unter mehreren Übertragungskanälen in einem Zeitmultiplex Verfahren ausgewählt wird, **dadurch gekennzeichnet, dass** es aufweist:

• ein Mittel (A1), um für mindestens einen Kanal eine periodische Übertragungsqualitätsanzeige dieses Kanals zu empfangen;
• einen Speicher (A2), um die Übertragungsqualitätsanzeigen jedes Kanals während eines Zeitfensters zu speichern;
• eine Rechenschaltung (A2.1-A2.T), um für jeden Kanal, für den eine periodische Übertragungsqualitätsanzeige empfangen wurde, die Position der aktuellen Übertragungsqualitätsanzeige dieses Kanals im Vergleich mit denjenigen zu bestimmen, die für diesen Kanal im Zeitfenster gespeichert sind;
• eine Auswahlschaltung (A3, A4) mindestens eines Übertragungskanals, dessen Position der aktuellen Übertragungsqualitätsanzeige im Vergleich mit denjenigen, die für diesen Kanal im Zeitfenster gespeichert sind, die beste ist.

13. Kommunikationssystem nach Anspruch 12, **da-**

**durch gekennzeichnet, dass** die Schaltung zur Auswahl mindestens eines Übertragungskanals ein Mittel zur Auswahl von Kanälen aufweist, über die Daten zu übertragen sind, und deren Position der aktuellen Übertragungsqualitätsanzeige im Vergleich mit den für diesen Kanal oder diese Kanäle im Zeitfenster gespeicherten Positionen die beste oder unter den besten ist.

14. Kommunikationssystem nach einem der Ansprüche 12 oder 13, **dadurch gekennzeichnet, dass** es mindestens eine Erfassungsschaltung (A1) des Übertragungsqualitätssignals des Kanals (2_i), nämlich Ci(t), zum Zeitpunkt t aufweist.

15. Kommunikationssystem nach einem der Ansprüche 12 oder 13, **dadurch gekennzeichnet, dass** es mindestens einen Speicher (A2) aufweist, der aus T Blöcken besteht, wobei jeder Block (A2.k) den Übertragungsqualitätswert des Kanals (2_i) im Zeitpunkt (t-k), nämlich Ci(t-k), für k von 1 bis T enthält.

16. Kommunikationssystem nach einem der Ansprüche 12 oder 13, **dadurch gekennzeichnet, dass** es mindestens eine Einheit (A3) von höchstens T Vergleichsschaltungen aufweist, wobei jede Schaltung (A3.k) die aktuelle Übertragungsqualitätsanzeige, die mindestens in der Schaltung (A1) enthalten ist, und die Übertragungsqualitätsanzeige zum Zeitpunkt t-k vergleicht, die im Speicherblock (A2.k) enthalten ist, für k von 1 bis T.

17. Kommunikationssystem nach einem der Ansprüche 12 oder 13, **dadurch gekennzeichnet, dass** es mindestens einen Addierer (A4), an dessen Eingang der Ausgang jeder Vergleichsschaltung (A3.k), für k von 1 bis T, angelegt ist, sowie einen unabhängigen Eingang aufweist, der immer den Wert 1 angibt.

FIGURE 1

STATION, 1

ENSEMBLE
DE CANAUX, 2

ENSEMBLE
DE POSTES, 3

1

2.1    ...    2.i    ...    2.N

3.1    3.i    3.N

# FIGURE 2

FIGURE 3

SIGNAL DE QUALITE DE
TRANSMISSION DU CANAL
$2\ i$

CIRCUIT
D'ACQUISITION,
A1

ENSEMBLE DE
COMPARATEURS,
A3

ADDITIONNEUR,
A4

$Ci(t)$

BLOC
A2.1    $Ci(t-1)$

A3.1

$>$

1

BLOC
A2.k    $Ci(t-k)$

A3.k

$>$

BLOC
A2.T    $Ci(t-T)$

A3.T

$>$

$+$

POSITION
$Pi$

MEMOIRE,
A2

FIGURE 4